# FASCICULE DE BREVET EUROPEEN

(11) **EP 3 363 557 B1**
(45) Date de publication et mention de la délivrance du brevet: **07.04.2021**
(21) Numéro de dépôt: 18157052.4
(22) Date de dépôt: 16.02.2018
(51) Int. Cl.: B21K 1/60, B23P 15/00, B21K 1/70, F16B 37/06

(54) **ECROU À SERTIR ET PROCÉDÉ DE FABRICATION D'UN TEL ÉCROU**
BLINDNIETMUTTER UND HERSTELLUNGSVERFAHREN EINER SOLCHEN MUTTER
RIVETING NUT AND METHOD FOR MANUFACTURING SUCH A NUT

(30) Priorité: 17.02.2017 FR 1751319
(43) Date de publication de la demande: 22.08.2018
(73) Titulaire: Bollhoff Otalu S.A., 73490 La Ravoire (FR)
(72) Inventeur: GRIS, Jean-Philippe, 73490 LA RAVOIRE (FR); RAHAL, Mohamed-Tahar, 73000 CHAMBERY (FR)
(74) Mandataire: Talbot, Alexandre

(56) Documents cités:
- FR-A1- 2 990 366
- FR-A3- 2 788 997

## Description

### Domaine technique de l'invention

L'invention concerne les écrous à sertir.

### État de la technique

Les écrous à sertir sont des accessoires d'assemblage qui peuvent être montés en aveugle dans des trous d'un support, c'est-à-dire depuis un côté de ce support et sans avoir accès au côté opposé du support.

Un écrou à sertir comporte un fût creux qui porte une tête de retenue. Un premier tronçon de ce fût est destiné à être plié en une configuration renflée, lors d'un sertissage à l'issue duquel cette configuration renflée et la tête de retenue tiennent entre eux une portion du support et assurent ainsi la fixation axiale de l'écrou à sertir. Un deuxième tronçon du fût porte un taraudage dans lequel une tige filetée pourra être vissée lors d'un assemblage.

Généralement, la fabrication des écrous à sertir comporte la conformation d'ébauches par forgeage à froid de corps en acier, puis un traitement thermique de ces ébauches, appelé recuit, et dans lesquelles des taraudages sont ensuite réalisés.

Pour certaines applications où les écrous sont soumis à de fortes contraintes mécaniques, des écrous à sertir dits « de haute résistance » sont requis. Leur fabrication soulève une difficulté particulière qui tient à la nécessité d'obtenir un écrou offrant une haute résistance à l'arrachement et qui soit suffisamment malléable pour pouvoir se plier sans trop de difficultés, et sans fissures afin de pouvoir être serti sur un support.

On peut citer le brevet européen EP 1 462 208, qui décrit un procédé de fabrication d'un écrou à sertir. Ce procédé comprend une formation d'une ébauche par une première frappe à froid d'une pièce brute métallique en acier, un traitement thermique par recuit de l'ébauche, puis un alésage par une seconde frappe à froid. L'opération de taraudage est effectuée après la seconde frappe à froid. Ce procédé de fabrication à double frappe à froid est complexe et onéreux car il nécessite deux étapes de forgeage de l'écrou.

La demande de brevet britannique GB 2 368 889 propose deux procédés pour la fabrication d'écrous à sertir.

Dans l'un de ces deux procédés, un insert est partiellement forgé à froid à partir d'un acier à basse teneur en carbone (ayant 0,1% de carbone), après quoi une portion seulement de l'insert fait l'objet d'un recuit localisé. Ensuite, un filetage interne est formé. L'étape de recuit localisé est cependant une étape onéreuse et complexe à mettre en œuvre car elle nécessite un équipement spécifique.

Dans l'autre procédé présenté dans la demande de brevet GB 2 368 889, un insert est partiellement forgé à froid à partir d'un acier à moyenne teneur en carbone, ayant entre 0,3 et 0,35% de carbone. L'étape de forgeage à froid est suivie d'un recuit de la totalité de l'insert puis d'un taraudage. Ce taraudage nécessite cependant d'être ensuite durci par une étape de durcissement par induction localisée au niveau de la zone taraudée afin d'améliorer la tenue mécanique de l'écrou.

En outre, on peut citer la demande de brevet français FR2990366, sur laquelle se base le préambule des revendications 1 et 6, qui divulgue un procédé de fabrication d'un accessoire d'assemblage à sertir sur un support, comprenant un forgeage à froid par lequel on conforme une masse d'acier à basse teneur en carbone en une pièce semi-finie, une trempe appliquée à toute la pièce et une opération de filetage.

### Objet de l'invention

Un objet de l'invention consiste à pallier les inconvénients précités, et plus particulièrement à fournir un écrou à sertir qui possède une tenue mécanique améliorée.

Un autre objet de l'invention est de fournir un procédé simple de fabrication d'un tel écrou.

Selon un aspect de l'invention, il est proposé un procédé de fabrication d'un écrou à sertir, comprenant les étapes suivantes :
- forger à froid un corps en acier pour former une ébauche comprenant un tronçon pliable destiné à se déformer en un bourrelet de sertissage, et un tronçon d'association,
- appliquer un traitement thermique sur l'ébauche, et
- tarauder le tronçon d'association pour former un filetage interne.

Dans ce procédé, le corps en acier comporte un pourcentage massique de carbone compris entre 0,15% et 0,25% inclus.

Ainsi, on peut fabriquer un écrou à sertir, dont un tronçon peut se déformer sans fissures, et qui comporte un tronçon taraudé offrant une résistance mécanique à l'arrachement efficace. Un tel écrou est fabriqué à partir d'un corps en acier à basse teneur en carbone, c'est-à-dire un corps en acier comportant un pourcentage massique de carbone compris entre 0,15% et 0,25% inclus. Conformément à la demande de brevet français FR2990366, les écrous à basse teneur en carbone sont durcis en effectuant une étape de trempe qui consiste à refroidir rapidement l'écrou pour augmenter sa dureté. Ainsi, ne pas soumettre une pièce en acier à basse teneur en carbone à une trempe, notamment après un recuit, est contraire à la pratique décrite au document FR2990366, en particulier lorsqu'une augmentation de la tenue mécanique est recherchée.

Grâce au recuit, le tronçon pliable reste suffisamment peu cassant et suffisamment malléable ou ductile pour pouvoir se plier en la configuration renflée, sans nécessiter l'usage d'efforts démesurés, et sans qu'apparaissent des défauts rédhibitoires tels que des fissures.

Parallèlement, une amélioration de la capacité mécanique de l'écrou en termes de charge maximale applicable est obtenue bien que le corps en acier sélectionné fasse l'objet d'un recuit sans que ce recuit soit suivi d'une trempe.

Le corps en acier peut comporter un pourcentage massique de manganèse compris entre 0,9% et 1,2% inclus et un pourcentage massique de bore compris entre 0,0008 et 0,0050% inclus.

L'étape de traitement thermique peut comporter un chauffage de l'ébauche à une température comprise entre 630°C et 720°C incluses.

Le chauffage de l'ébauche peut être effectué à une température maintenue constante.

Le chauffage de l'ébauche peut être effectué pendant une durée comprise entre 10 et 15 minutes.

L'étape de taraudage peut comporter un fluage sans enlèvement de matière d'une surface interne du tronçon d'association.

Selon un autre aspect de l'invention, il est proposé un écrou à sertir, comprenant un tronçon pliable destiné à se déformer en un bourrelet de sertissage, et un tronçon d'association comprenant un filetage interne.

L'écrou est en acier comportant un pourcentage massique de carbone compris entre 0,15% et 0,25% inclus.

L'écrou peut comporter un pourcentage massique de manganèse compris entre 0,9% et 1,2% inclus et un pourcentage massique de bore compris entre 0,0008 et 0,0050% inclus.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, parmi lesquels :
- la figure 1, est une vue mixte, pour une moitié à gauche en coupe et pour une moitié à droite en perspective, d'un mode de réalisation d'un écrou à sertir conforme à l'invention,
- la figure 2, est une vue mixte de l'écrou illustré à la figure 1 après avoir été fixé par sertissage, dans un trou d'une plaque de support,
- la figure 3, illustre schématiquement les principales étapes d'un mode de mise en œuvre d'un procédé conforme à l'invention,
- la figure 4, est une vue latérale d'un corps en acier destiné à être forgé à froid,
- la figure 5, est une vue mixte d'un mode de réalisation d'une ébauche, et
- la figure 6 est une vue en coupe d'un autre mode de réalisation d'un écrou.

### Description détaillée

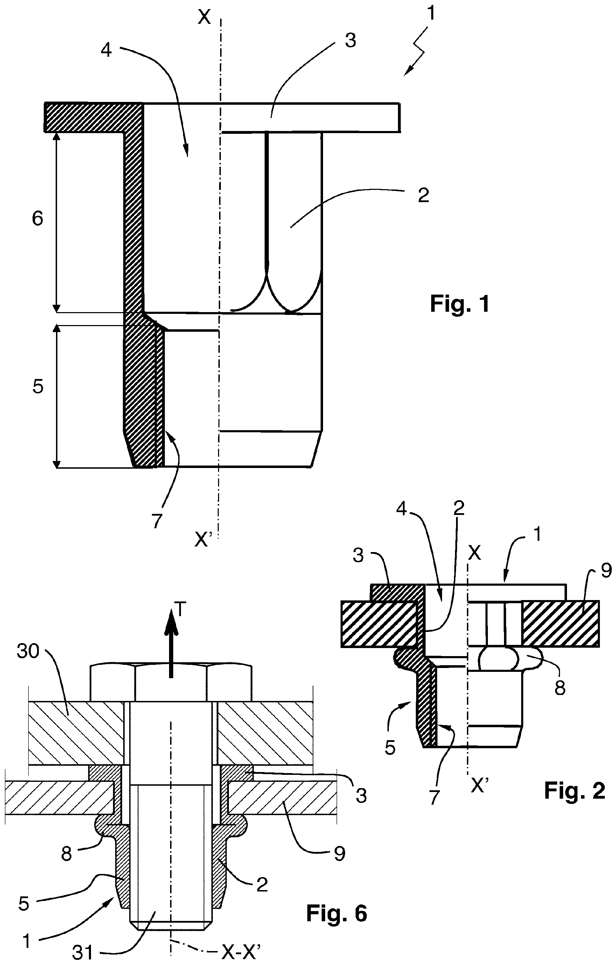

Sur la figure 1, la référence 1 désigne un écrou à sertir conforme à l'invention. Cet écrou à sertir 1 est une pièce d'un seul tenant. Il s'agit avantageusement d'un écrou à sertir pouvant être monté en aveugle.

L'écrou à sertir 1 comporte un fût creux 2 et une tête de retenue axiale 3, qui présente la forme d'un rebord extérieur équipant une extrémité de ce fût creux 2. Le fût 2 et la tête 3 sont avantageusement coaxiaux, en étant centrés sur un même axe longitudinal X-X'. Un trou axial 4 pour le passage d'une tige s'étend à travers la tête 3 et dans le fût 2. Dans l'exemple représenté, il s'agit d'un trou débouchant. En alternative, le trou axial 4 peut être borgne.

Le fût 2 comporte deux tronçons décalés axialement l'un de l'autre, à savoir un tronçon d'association 5 taraudé pour l'ancrage d'une tige filetée par vissage, et un tronçon pliable 6 qui est disposé entre ce tronçon taraudé 5 et la tête 3. Au niveau de son tronçon pliable 6, la paroi du fût 2 est moins épaisse qu'au niveau du tronçon d'association 5.

Le taraudage que porte le tronçon d'association 5 est référencé 7. Ce taraudage 7 correspond à un filetage interne.

Le tronçon pliable 6 est suffisamment malléable pour pouvoir se raccourcir selon un mouvement d'accordéon, en se pliant sur lui-même, lorsque le tronçon d'association 5 est tiré vers la tête 3. Lorsqu'il se plie, ce tronçon pliable 6 se déforme vers une configuration renflée de retenue axiale, noté bourrelet de sertissage référencé 8 à la figure 2, qui illustre l'écrou 1 après son sertissage sur un support 9, par exemple une plaque.

Sur la figure 2, la configuration renflée 8 est un bourrelet annulaire extérieur en contact avec le support 9. La configuration renflée 8 et la tête 3 serrent axialement entre elles le support 9.

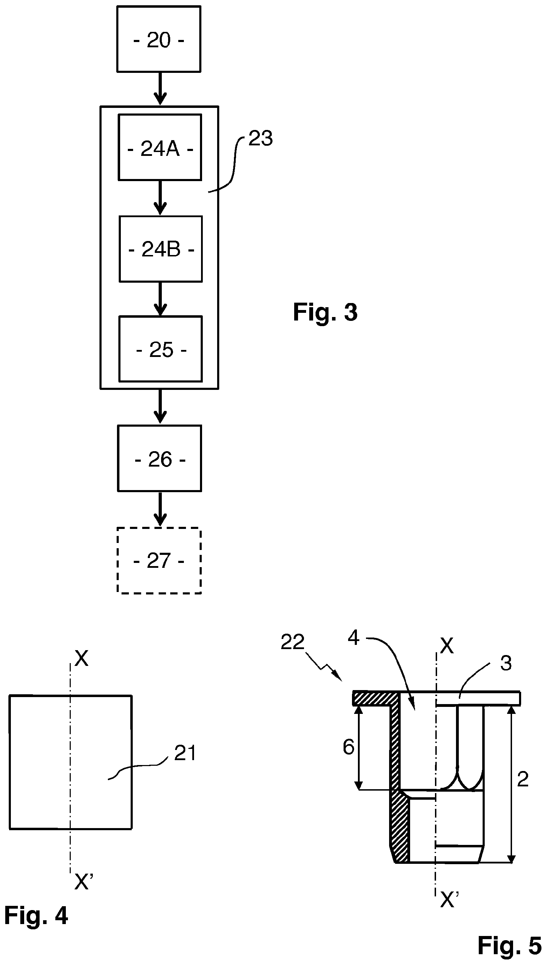

Le procédé de fabrication de l'écrou à sertir 1 comporte une succession d'étapes schématisées par des rectangles à la figure 3. L'une de ces étapes est un forgeage à froid 20, dans lequel une masse d'acier à l'état de lopin, notée corps en acier et référencé 21 à la figure 4, est conformée en une ébauche 22. Ce lopin 21 est fait d'un acier forgeable à froid. Plus particulièrement, cet acier comprend un pourcentage massique de carbone compris entre 0,15 % et 0,25% inclus, c'est un acier à basse teneur en carbone. Le lopin 21 peut également être en acier comprenant des teneurs particulières en manganèse et en bore. Lesdites teneurs particulières, exprimées en pourcentage massique, étant les suivantes :
- manganèse : entre 0,9 à 1,2% inclus, et
- bore : entre 0,0008 à 0,0050% inclus.

Le pourcentage massique d'un composant est égal à cent fois la fraction massique du composant. La fraction massique d'un composant est égale au rapport de la masse du composant sur la masse totale du lopin 21.

Les aciers 17MnB4, 20MnB4 et 23MnB4 présentent des teneurs en carbone, manganèse et bore comprises dans les gammes indiquées ci-dessus. En particulier, ces aciers ont les teneures suivantes exprimées en pourcentage massique.

Pour l'acier 17MnB4 :
- carbone : entre 0,15% et 0,20% inclus ;
- manganèse : entre 0,9% et 1,2% inclus ; et
- bore : 0,0008% et 0,0050%.

Pour l'acier 20MnB4 :
- carbone : entre 0,18% et 0,23% inclus ;
- manganèse : entre 0,9% et 1,2% inclus ; et
- bore : 0,0008% et 0,0050%.

Pour l'acier 23MnB4 :
- carbone : entre 0,20% et 0,25% inclus ;
- manganèse : entre 0,9% et 1,2% inclus ; et
- bore : 0,0008% et 0,0050%.

Dans l'exemple décrit ici, l'acier du lopin 21 est plus précisément de l'acier 20MnB4. Ayant donné de bons résultats, l'emploi de l'acier 20MnB4 est en effet avantageux.

L'ébauche obtenue par le forgeage à froid 20 est représentée seule et référencée 22 à la figure 5. Elle est d'un seul tenant et possède la même conformation que l'écrou à sertir 1 prêt à l'emploi, sauf en ce que le taraudage 7 n'est pas encore présent.

Le forgeage à froid 20 entraîne un écrouissage du lopin 21 qui, combiné avec les propriétés intrinsèques de ce dernier lui confère une résistance et une ténacité élevées. L'écrouissage du lopin 21 affecte certaines propriétés mécaniques de l'acier, notamment celles qui doivent permettre au tronçon pliable 6 d'être plié correctement en la configuration renflée 8, sans qu'apparaissent des défauts rédhibitoires tels que des fissures. La propriété de pliage est au moins partiellement restaurée au moyen d'un traitement thermique 23, appelé également recuit, qui suit le forgeage à froid 20. Préférentiellement, le recuit 23 est appliqué à l'ensemble de l'ébauche 22 afin que le procédé soit simplifié et plus économique. En outre, le recuit 23 permet de diminuer la dureté de l'ébauche 22 afin d'obtenir un tronçon pliable 6 qui puisse se déformer. Le recuit 23 de l'ébauche 22 ne nécessite pas d'équipements spécifiques et peut, au contraire, être effectué au moyen d'un four conventionnel.

Le recuit 23 est plus précisément un recuit de recristallisation par lequel la structure distordue et écrouie par le forgeage à froid 20 est remplacée par une nouvelle structure à grains reformés. Le recuit de recristallisation 23 effectué sur l'ébauche 22 diminue certaines performances comme la résistance à la traction et la dureté, mais permet de ré-homogénéiser la structure de l'ébauche 22 et de lui conférer une augmentation du coefficient d'allongement nécessaire à la fonction finale du tronçon pliable 6.

Dans un mode de réalisation particulier, le recuit 23 est effectué au moyen d'un four que l'on a préalablement porté à une température de recuit. L'ébauche 22 est placée dans ce four déjà à la température de recuit. Suite à cela, il se produit un chauffage 24A de l'ébauche 22. Cette ébauche 22 est laissée dans le four à une température maintenue sensiblement constante 24B, à savoir à la température de recuit. La température de recuit est comprise entre 630°C et 720°C incluses. Plus particulièrement, la température de recuit est maintenue constante 24B pendant une durée comprise entre 10 et 15 minutes. Le maintien 24B de l'ébauche 22 à la température de recuit prend fin de manière sensiblement instantanée, par une sortie de cette ébauche 22 hors du four. Cette sortie du four est suivie d'un refroidissement lent 25 de l'ébauche 22 à l'air libre et à une température ambiante, inférieure à la température de recuit.

La température de recuit et la durée du maintien 24B à cette température de recuit sont à adapter en fonction de l'acier employé.

Le recuit 23 est suivi d'une opération de taraudage 26 comme illustré à la figure 3. Avantageusement, l'opération de taraudage 26 est un taraudage par fluage sans enlèvement de matière, encore appelé taraudage par déformation, dans lequel on forme le taraudage 7 en faisant fluer l'acier localement, au niveau d'une surface interne du tronçon d'association 5, et dans lequel il se produit ainsi un écrouissage produisant un durcissement de la matière au niveau du taraudage 7. Alternativement, le taraudage 7 peut être ménagé par enlèvement de matière.

L'écrou à sertir 1 obtenu au moyen du forgeage à froid 20, du recuit 23 et de l'opération de taraudage 26 est compatible avec un traitement de surface 27 optionnel. Ce traitement de surface 27 peut être un dépôt électrolytique ou une projection d'un revêtement anticorrosion, aussi bien qu'une immersion dans un bain de produit de revêtement anticorrosion. Le traitement de surface 27 peut doter l'écrou à sertir 1 d'un revêtement d'isolation électrique, ou d'un revêtement de conduction électrique, ou bien encore d'un revêtement d'aspect esthétique. Le revêtement apporté par le traitement de surface 27 peut également être un revêtement d'étanchéité comme un revêtement de freinage d'un vissage dans le taraudage 7.

La capacité mécanique de l'écrou à sertir 1 obtenu au moyen du procédé défini ci-avant est améliorée en termes de charge maximale applicable. En outre, le tronçon pliable 6 de l'écrou à sertir 1 obtenu est suffisamment malléable pour pouvoir former la configuration renflée 8, après avoir été comprimé axialement. Ce tronçon pliable 6 se plie sans que cela nécessite l'usage d'efforts démesurés et sans qu'apparaissent des défauts rédhibitoires tels que des fissures.

A la figure 6, un accessoire d'assemblage comporte un écrou à sertir 1 obtenu au moyen du procédé défini ci-avant. L'écrou à sertir 1 possède un tronçon taraudé d'association 5 complémentaire d'une tige filetée. Il participe à l'assemblage d'un équipement 30 à un support 9, au moyen d'une vis référencée 31, dont la tige filetée est vissée dans le tronçon d'association 5. Des essais en traction axiale sur une tête de la vis 31 dans le sens de la flèche T, alors que les autres éléments représentés à la figure 6 étaient retenus dans le sens inverse, ont montré que le vissage de cette vis 31 dans le tronçon d'association 5 possède une tenue à l'arrachement supérieure à 60 300 N et plus particulièrement supérieure à 67 300 N.

Egalement, on a constaté que la tête 3 de l'écrou à sertir 1 présente l'avantage de présenter une résistance améliorée au matage, c'est-à-dire au refoulement accidentel de matière dû à des chocs répétés.

L'acier de l'écrou à sertir 1 est un acier comprenant un pourcentage massique de carbone compris entre 0,15% à 0,25%. L'écrou 1 peut également comporter un pourcentage massique de manganèse compris entre 0,9 à 1,2% et de bore compris entre 0,0008 à 0,0050%.

L'écrou à sertir selon l'invention ou obtenu selon le procédé de l'invention présente une microstructure cristalline particulière par rapport aux accessoires d'assemblage de l'art antérieur. En effet, le recuit de recristallisation concerne l'ensemble de la pièce, et non pas un recuit localisé où la zone de recristallisation ne concerne que le tronçon de pliage.

## Revendications

1. Procédé de fabrication d'un écrou à sertir (1), comprenant les étapes suivantes :
- forger à froid (20) un corps en acier (21) pour former une ébauche (22) comprenant un tronçon pliable (6) destiné à se déformer en un bourrelet de sertissage (8), et un tronçon d'association (5), le corps en acier comportant un pourcentage massique de carbone compris entre 0,15% et 0,25% inclus,
- appliquer un traitement thermique (23) sur l'ébauche (22), et
- tarauder (26) le tronçon d'association (5) pour former un filetage interne (7),
**caractérisé en ce que** l'étape de traitement thermique (23) est effectuée au moyen d'un four porté à une température de recuit, et comporte un chauffage (24A, 24B) de l'ébauche (22) à la température de recuit comprise entre 630°C et 720°C incluses.

2. Procédé selon la revendication 1, dans lequel le corps en acier (21) comporte un pourcentage massique de manganèse compris entre 0,9% et 1,2% inclus et un pourcentage massique de bore compris entre 0,0008 et 0,0050% inclus.

3. Procédé selon la revendication 1 ou 2, dans lequel le chauffage (24A, 24B) de l'ébauche (22) est effectué à la température de recuit maintenue constante.

4. Procédé selon l'une des revendications 1 à 3, dans lequel le chauffage (24A, 24B) de l'ébauche (22) est effectué pendant une durée comprise entre 10 et 15 minutes.

5. Procédé selon l'une des revendications 1 à 4, dans lequel l'étape de taraudage (26) comporte un fluage sans enlèvement de matière d'une surface interne du tronçon d'association (5).

6. Ecrou à sertir, comprenant un tronçon pliable (6) destiné à se déformer en un bourrelet de sertissage (8), et un tronçon d'association (5) comprenant un filetage interne (7), l'écrou étant en acier comportant un pourcentage massique de carbone compris entre 0,15% et 0,25% inclus, **caractérisé en ce qu'**il comporte un pourcentage massique de manganèse compris entre 0,9% et 1,2% inclus et un pourcentage massique de bore compris entre 0,0008 et 0,0050% inclus.

## Patentansprüche

1. Verfahren zur Herstellung einer Blindnietmutter (1), umfassend die folgenden Schritte:
- Kaltschmieden (20) eines Stahlkörpers (21) zur Bildung eines Rohlings (22), umfassend einen faltbaren Abschnitt (6), der dazu bestimmt ist, sich zu einem Blindnietwulst (8) zu verformen, und einen Assoziationsabschnitt (5), wobei der Stahlkörper einen Massenprozentsatz an Kohlenstoff zwischen einschließlich 0,15 % und 0,25 % umfasst,
- Anwenden einer Wärmebehandlung (23) an den Rohling (22), und
- Gewindeformen (26) des Assoziationsabschnitts (5), um ein Innengewinde (7) zu bilden,
**dadurch gekennzeichnet, dass** der Schritt der Wärmebehandlung (23) mittels eines auf Glühtemperatur gebrachten Ofens durchgeführt wird und das Erhitzen (24A, 24B) des Rohlings (22) auf die Glühtemperatur zwischen einschließlich 630 °C und 720 °C umfasst.

2. Verfahren nach Anspruch 1, wobei der Stahlkörper (21) einen Massenprozentsatz an Mangan zwischen einschließlich 0,9 % und 1,2 % und einen Massenprozentsatz an Bor zwischen einschließlich 0,0008 und 0,0050 % umfasst.

3. Verfahren nach Anspruch 1 oder 2, wobei das Erhitzen (24A, 24B) des Rohlings (22) bei der Glühtemperatur durchgeführt wird, die konstant gehalten wird.

4. Verfahren nach einem der Ansprüche 1 bis 3, wobei das Erhitzen (24A, 24B) des Rohlings (22) während einer Dauer zwischen 10 und 15 Minuten durchgeführt wird.

5. Verfahren nach einem der Ansprüche 1 bis 4, wobei der Gewindeformschritt (26) ein Kriechen umfasst, ohne Material von einer Innenfläche des Assoziationsabschnitts (5) zu entfernen.

6. Blindnietmutter, umfassend einen faltbaren Abschnitt (6), der dazu bestimmt ist, sich zu einem Blindnietwulst (8) zu verformen, und einen Assoziationsabschnitt (5), der ein Innengewinde (7) umfasst, wobei die Mutter aus Stahl besteht, umfassend einen Massenprozentsatz an Kohlenstoff zwischen einschließlich 0,15 % und 0,25 %, **dadurch gekennzeichnet, dass** sie einen Massenprozentsatz an Mangan zwischen einschließlich 0,9 % und 1,2 % und einen Massenprozentsatz an Bor zwischen einschließlich 0,0008 und 0,0050% umfasst.

## Claims

1. Method for manufacturing a clinch nut (1), comprising the following steps:
- cold forging (20) a steel body (21) to form a workpiece (22) comprising a pliable section (6) designed to deform into a crimping bead (8), and a connection section (5), the steel body (21) comprising a weight percentage of carbon comprised between 0.15% and 0.25% inclusive,
- applying a heat treatment (23) to the workpiece (22), and
- tapping (26) the connection section (5) to form an internal thread (7), **characterized in that** the heat treatment step (23) is performed by means of a furnace which has been previously heated to an annealing temperature, and the method comprises a heating (24A, 24B) of the workpiece (22) at the annealing temperature comprised between 630°C and 720°C inclusive.

2. Method according to claim 1, wherein the steel body (21) comprises a weight percentage of manganese comprised between 0.9% and 1.2% inclusive and a weight percentage of boron comprised between 0.0008% and 0.0050% inclusive.

3. Method according to claim 1 or 2, wherein the heating (24A, 24B) of the workpiece (22) is performed at the annealing temperature that is kept constant.

4. Method according to one of the claims 1 to 3, wherein the heating (24A, 24B) of the workpiece (22) is performed for a time period comprised between 10 and 15 minutes.

5. Method according to one of claims 1 to 4, wherein the tapping step (26) comprises a creep without removal of material from an internal surface of the connection section (5).

6. Clinch nut, comprising a pliable section (6) designed to deform into a crimping bead (8), and a connection section (5) comprising an internal thread (7), the nut being made from steel comprising a weight percentage of carbon comprised between 0.15% and 0.25% inclusive, **characterized in that** it comprises a weight percentage of manganese comprised between 0.9% and 1.2% inclusive and a weight percentage of boron comprised between 0.0008% and 0.0050% inclusive.
